# EUROPÄISCHE PATENTSCHRIFT

(11) **EP 2 184 830 B1**
(45) Veröffentlichungstag und Bekanntmachung des Hinweises auf die Patenterteilung: **09.03.2011**
(21) Anmeldenummer: 08017914.6
(22) Anmeldetag: 13.10.2008
(51) Int. Cl.: H02H 7/085

(54) **Vorrichtung zur Temperaturüberwachung einer mehrphasigen Stromwicklung einer elektrischen Maschine**
Device for monitoring the temperature of a multi-phase energy coil of an electric machine
Dispositif de surveillance de la température d'un enroulement de courant multiphasé d'une machine électrique

(43) Veröffentlichungstag der Anmeldung: 12.05.2010
(73) Patentinhaber: Siemens Aktiengesellschaft, 80333 München (DE)
(72) Erfinder: Wöhning, Michael, 97461 Hofheim (DE)

(56) Entgegenhaltungen:
- EP-A1- 1 648 069
- DE-A1- 19 713 448
- FR-A- 1 490 182
- ANONYMOUS: "Simodrive Linearmotoren 1FN1, 1FN3" [Online] Juni 2002 (2002-06), SIEMENS AG. SINUMERIK-DOCUMENTATION , XP002515720 Siemens online library Gefunden im Internet: URL:http://www.automation.siemens.com/doco nweb/pdf/840C_1101_D/PJLM.pdf?p=1> [gefunden am 2009-02-17] * Seiten 1FN3-152 - Seiten 1FN3-157 * * Seiten CON-270 - Seiten CON-272 *

## Beschreibung

Die Erfindung betrifft eine Vorrichtung zur Temperaturüberwachung einer mehrphasigen Stromwicklung einer elektrischen Maschine. Die Vorrichtung weist eine Reihen- und/oder Parallelschaltung aus einer der Anzahl von Phasenwicklungen entsprechenden Anzahl von ersten temperaturabhängigen Widerständen und aus einem zweiten temperaturabhängigen Widerstand insbesondere zur Temperaturerfassung nur einer der Phasenwicklungen auf. Die Reihen- und/oder Parallelschaltung ist in Reihe zu einer Konstantspannungsquelle geschaltet. Die Vorrichtung weist einen Detektor zum Detektieren einer Änderung der an der Reihen- und/oder Parallelschaltung anliegenden Spannung oder des hindurchfließenden Stroms und zum Ansteuern eines Schaltkontaktes auf, um bei Erreichen eines zu einer vorgegebenen Übertemperatur entsprechenden Spannungs- oder Stromwertes das Vorliegen der Übertemperatur an eine angeschlossene Maschinensteuerung auszugeben.

Die Erfindung betrifft weiterhin ein Temperaturüberwachungsmodul zur Anbringung an der elektrischen Maschine sowie eine elektrische Maschine mit einem im Bereich der mehrphasigen Stromwicklung der elektrischen Maschine angeordneten Temperaturüberwachungsmodul.

Bei der elektrischen Maschine kann es sich um einen Elektromotor oder um einen Generator handeln. Insbesondere ist die erfindungsgemäße Vorrichtung zur Temperaturüberwachung der mehrphasigen Stromwicklung eines Synchronmotors vorgesehen. Derartige Motoren dienen z.B. zum Antrieb einer Motorspindel. Insbesondere hat dort das Überschreiten einer maximal zulässigen Wicklungstemperatur zur Folge, dass neben dem Stator mit der mehrphasigen Stromwicklung zumeist auch der typischerweise permanenterregte Rotor sowie die Lager für die Lagerung des Rotors Schaden nehmen. Grund hierfür ist vor allem der äußerst kompakte Aufbau der Motorspindel bei einer vergleichsweise sehr hohen elektrischen Leistungsdichte und bei einer vergleichsweise ungünstigen Kühlungsmöglichkeit des Elektromotors.

Zur Temperaturüberwachung ist es bekannt, für jede Phase der Stromwicklung einen ersten temperaturabhängigen Widerstand zu verwenden. Diese werden üblicherweise in Reihe verschaltet und zur Überwachung an eine Motorschutzeinheit angeschlossen. Letztere öffnet im Falle einer detektierten Übertemperatur einen Schaltkontakt, der von einer Steuereinheit, wie z.B. von einer sogenannten SPS (für Speicherprogrammierbare Steuerung), erfasst wird. Die SPS kann dann ein Abschaltsignal über eine Signal- oder Busverbindung an die zugehörige Maschinensteuerung zum Abschalten der elektrischen Maschine ausgeben.

Bei den ersten temperaturabhängigen Widerständen kann es sich um sogenannte PTC-Widerstände (PTC für Positive Temperature Coefficient), das heißt um Kaltleiter mit einem positiven Temperaturkoeffizienten, handeln. Insbesondere weisen diese ersten temperaturabhängigen Widerstände einen stark nichtlinearen Widerstandsverlauf auf, einhergehend mit einer starken Widerstandserhöhung bei Überschreiten einer vorgegebenen, das heißt zu überwachenden Temperatur. Eine unzulässige Überhitzung nur einer der Phasen ist z.B. dann möglich, wenn nur eine der Phasen bestromt wird, wie z.B. im Stillstand oder bei sehr geringer Drehzahl. Durch die Reihenschaltung ist eine gemeinsame Überwachung aller Phasen auf eine maximale Übertemperatur hin möglich. Eine solche Reihenschaltung wird für den Fall einer dreiphasigen elektrischen Maschine auch als Kaltleiterdrilling bezeichnet. Üblicherweise werden die beiden Anschlüsse eines solchen Kaltleiterdrillings in einem Drehgeberkabel zur Maschinen- bzw. Antriebssteuerung mitgeführt.

Weiterhin ist es aus dem Stand der Technik bekannt, nur einen (einzigen) zweiten temperaturabhängigen Widerstand zur Temperaturerfassung nur einer der Phasen der mehrphasigen Stromwicklung vorzusehen. Dieser Widerstandstyp weist typischerweise einen weitgehend linearen Widerstandsverlauf auf und ermöglicht eine sehr genaue Temperaturerfassung, wie sie vor allem für die Maschinensteuerung zur Steuerung und Regelung der elektrischen Maschine benötigt wird. Bei diesem zweiten temperaturabhängigen Widerstand handelt es sich vorzugsweise gleichfalls um einen Kaltleiter, wie z.B. vom Typ KTC 84. Zur Temperaturerfassung ist es hier im Vergleich zur Übertemperaturerfassung jeder einzelnen Phase ausreichend, nur eine Phasenwicklungstemperatur zu erfassen, da diese im Normalbetrieb der elektrischen Maschine in etwa für alle Phasen gleich ist.

Eine solche Vorrichtung zur Temperaturüberwachung gemäss dem Oberbegriff des Patentanspruch 1 ist in der Projektierungsanleitung von Siemens für Simodrive Linearmotoren 1FN1, 1FN3, Ausgabe 06/2002, auf Seite CON- 271 beschrieben.

Ausgehend von dem eingangs genannten Stand der Technik ist es eine Aufgabe der Erfindung, eine Vorrichtung zur Temperaturüberwachung einer mehrphasigen Stromwicklung einer elektrischen Maschine anzugeben, welche weniger Komponenten benötigt und bei welcher der Verschaltungsaufwand verringert ist.

Es ist eine weitere Aufgabe der Erfindung, ein geeignetes Temperaturüberwachungsmodul mit einer derartigen Vorrichtung zur Anbringung an einer elektrischen Maschine anzugeben.

Schließlich ist es eine Aufgabe der Erfindung, eine geeignete elektrische Maschine mit einem derartigen Temperaturüberwachungsmodul anzugeben.

Die Aufgabe der Erfindung wird mit einer Vorrichtung mit den Merkmalen des Patentanspruchs 1 gelöst. Vorteilhafte Ausführungsförmen der Vorrichtung sind in den abhängigen Ansprüchen 2 bis 8 angegeben. Im Anspruch 9 ist ein geeignetes Temperaturüberwachungsmodul genannt. Im Anspruch 10 ist eine vorteilhafte Ausführungsform des Temperaturüberwachungsmoduls angegeben. Im Anschluss 11 ist eine elektrische Maschine, insbesondere ein Elektromotor, mit einem derartigen Temperaturüberwachungsmodul genannt.

Erfindungsgemäß ist der zweite temperaturabhängige Widerstand in Reihe zum Schaltkontakt geschaltet, sodass bei geschlossenem Schaltkontakt die vom zweiten temperaturabhängigen Widerstand erfasste Temperatur und bei geöffnetem Schaltkontakt das Vorliegen der Übertemperatur ausgebbar ist.

Kernidee der vorliegenden Erfindung ist die Verwendung eines einzigen Signalpfades zur Ausgabe einer genauen Stromwicklungstemperatur an eine angeschlossene Maschinensteuerung sowie zur Ausgabe einer unabhängig davon sicher ermittelten kritischen Übertemperatur, indem der durch den zweiten temperaturabhängigen Widerstand fließende Temperaturmessstrom unterbrochen wird. Eine solche Unterbrechung wird von der Maschinensteuerung als quasi "unendlicher" Temperaturanstieg interpretiert.

Der besondere Vorteil der vorliegenden Erfindung ist, dass auf die Motorschutzeinheit und auf eine schaltungstechnische Einbindung der erfindungsgemäßen Vorrichtung in eine SPS verzichtet werden kann. Mit anderen Worten kann in diesem Fall auf einen Digitaleingang und auf einen Digitalausgang einer SPS sowie auf den hierzu erforderlichen Programmieraufwand verzichtet werden. Zudem entfällt der damit verbundene Verdrahtungsaufwand. Ein weiterer Vorteil ist, dass es, nicht zu einer negativen, wechselseitigen Signalbeeinflussung zwischen den Anschlussleitungen eines Kaltleiterdrillings und den Signalleitungen eines Drehgebers kommen kann.

Nach einer Ausführungsform ist der Detektor eine in Reihe zur Reihen- und/oder Parallelschaltung geschaltete Erregerspule eines Schaltrelais. Es sind der gesamte Widerstandswert der Reihen- und/oder Parallelschaltung und der Widerstandswert der Erregerspule derart aufeinander abgestimmt, dass das Schaltrelais bei Überschreiten der vorgegebenen Übertemperatur den Schaltkontakt öffnet. Dabei schaltet das Schaltrelais bei Erreichen einer vorbestimmten Stromschwelle definiert mit einer Hysterese um. Insbesondere fällt das Schaltrelais ab und öffnet dabei einen Schließerkontakt, da bei Erreichen der vorbestimmten Übertemperatur nun eine gröβere Spannung an der Reihen- und/oder Parallelschaltung abfällt und zugleich eine geringere Spannung an der Erregerspule wegen der Konstantspannungsquelle abfällt. Der besondere Vorteil bei dieser schaltungstechnischen Anordnung ist die minimale Anzahl der hierfür benötigten Bauelemente.

Alternativ dazu kann ein erster Vorwiderstand in Reihe zur Reihen- und/oder Parallelschaltung geschaltet sein. Der Detektor ist eine parallel an die Reihen- und/oder Parallelschaltung oder parallel an den Vorwiderstand geschaltete Erregerspule eines Schaltrelais. Es sind der Widerstandswert der Reihen- und/oder Parallelschaltung sowie die Widerstandswerte des ersten Vorwiderstandes und der Erregerspule derart aufeinander abgestimmt, dass das Schaltrelais wiederum bei Überschreiten der vorgegebenen Übertemperatur den Schaltkontakt öffnet. Diese schaltungstechnische Anordnung ist durch die Auswahlmöglichkeit des Vorwiderstandes im Vergleich zur vorherigen Ausführungsform flexibler. Ist die Erregerspule parallel zum Vorwiderstand angeordnet, so fällt das Schaltrelais bei Erreichen der bestimmten Übertemperatur ab und öffnet den als Schließerkontakt ausgeführten Schaltkontakt. Ist dagegen die Erregerspule parallel zur Reihen- und/oder Parallelschaltung angeordnet, so wird das Schaltrelais erst bei Erreichen der bestimmten Übertemperatur erregt, um dann einen als Öffnerkontakt ausgeführten Schaltkontakt zu öffnen.

Nach einer weiteren Ausführungsform ist der Detektor eine in Reihe zur Reihen- und/oder Parallelschaltung geschaltete Erregerspule eines Schaltrelais. Es sind der gesamte Widerstandswert der Reihen- und/oder Parallelschaltung und der Widerstandswert der Erregerspule derart aufeinander abgestimmt, dass das Schaltrelais bei Überschreiten einer vorgegebenen Warntemperatur, die kleiner ist als die Übertemperatur, einen ersten Wechslerkontakt öffnet und einen zweiten Wechslerkontakt schließt. Weiterhin weist die Vorrichtung ein Zeitschaltrelais auf, welches bei Überschreiten der Warntemperatur zeitverzögert den Schaltkontakt öffnet, um das Vorliegen der Übertemperatur an die Maschinensteuerung auszugeben. Es ist beim Öffnen des ersten Wechslerkontaktes und beim Schließen des zweiten Wechslerkontaktes anstelle des zweiten temperaturabhängigen Widerstandes nun ein zweiter Vorwiderstand mit einem auf die Warntemperatur abgestimmten Widerstandswert in Reihe zum Schaltkontakt schaltbar, um das Vorliegen der Warntemperatur an die Maschinensteuerung auszugeben.

Der besondere Vorteil bei dieser Ausführungsform ist, dass die Maschinensteuerung bei Eintreffen des Vorliegens der Warntemperatur noch geeignete Maßnahmen veranlassen kann, um die elektrische Maschine und die damit verbundene anzutreibende Komponente, wie z.B. die Spindeleinheit einer Motorspindel, kontrolliert herunterzufahren. Nach Ablauf der Verzögerungszeit erfolgt dann die "harte" Abschaltung der elektrischen Maschine. Die Verzögerungszeit liegt vorzugsweise in einem Zeitraum von 2 bis 10 Sekunden.

Alternativ zur vorherigen Ausführungsform kann auch ein erster Vorwiderstand in Reihe zur Reihen- und/oder Parallelschaltung geschaltet sein. Der Detektor ist in diesem Fall eine parallel an die Reihen- und/oder Parallelschaltung oder parallel an den ersten Vorwiderstand geschaltete Erregerspule eines Schaltrelais. Der gesamte Widerstandswert der Reihen- und/oder Parallelschaltung sowie die Widerstandswerte des ersten Vorwiderstandes und der Erregerspule sind derart aufeinander abgestimmt, dass das Schaltrelais bei Überschreiten der vorgegebenen Warntemperatur wiederum den ersten Wechslerkontakt öffnet und den zweiten Wechslerkontakt schließt.

Nach einer weiteren alternativen Ausführungsform ist der Detektor eine in Reihe zur Reihen- und/oder Parallelschaltung geschaltete Leuchtdiode eines Optokopplers. Der Schaltkontakt ist ein photosensitiver elektronischer Schaltkontakt des Optokopplers. Der gesamte Widerstandswert der Reihen- und/oder Parallelschaltung und die elektrischen Kennwerte der Leuchtdiode, das heißt insbesondere deren Widerstandswert und deren Nenndurchlassstromwert, sind derart aufeinander abgestimmt, dass der Optokoppler bei Überschreiten der vorgegebenen Übertemperatur den elektronischen Schaltkontakt öffnet. Dadurch ist im Vergleich zu den vorherigen Lösungen eine kompaktere und zugleich verschleißfreie Realisierung der erfindungsgemäßen Vorrichtung möglich. Vorzugsweise weisen die als integrierte Bauelemente verfügbaren Optokoppler einen Schmitt-Trigger-Phototransistor als photosensitiven elektronischen Schaltkontakt auf. Dadurch schaltet der Phototransistor bei Erreichen der entsprechenden Übertemperatur schnell und zugleich definiert um.

Alternativ zur vorherigen Ausführungsform kann ein erster Vorwiderstand in Reihe zur Reihen- und/oder Parallelschaltung geschaltet sein. Der Detektor ist in diesem Fall eine parallel an die Reihen- und/oder Parallelschaltung oder eine parallel an den ersten Vorwiderstand geschaltete Leuchtdiode eines Optokopplers. Der Schaltkontakt ist wiederum ein photosensitiver elektronischer Schaltkontakt des Optokopplers. Der gesamte Widerstandswert der Reihen- und/oder Parallelschaltung, der Widerstandswert des ersten Vorwiderstandes sowie die elektrischen Kennwerte der Leuchtdiode sind derart aufeinander abgestimmt, dass der Optokoppler bei Überschreiten der vorgegebenen Übertemperatur wiederum den elektronischen Schaltkontakt öffnet.

Nach einer weiteren, besonders vorteilhaften Ausführungsform umfasst der Detektor zwei parallelgeschaltete und in Reihe zur Reihen- und/oder Parallelschaltung geschaltete Leuchtdioden eines ersten und zweiten Optokopplers mit jeweils einem zugehörigen photosensitiven elektronischen Schaltkontakt. Der Schaltkontakt des zweiten Optokopplers ist parallel zu einem zweiten Vorwiderstand geschaltet, wobei letzterer einen auf eine vorgegebene Warntemperatur abgestimmten Widerstandswert aufweist. Weiterhin ist der Schaltkontakt des ersten Optokopplers in Reihe zu dieser Parallelschaltung und zum zweiten temperaturabhängigen Widerstand geschaltet. Die elektrischen Kennwerte der Leuchtdioden sind derart auf den gesamten Widerstandswert der Reihen- und/oder Parallelschaltung abstimmt, dass der zweite Optokoppler den zugehörigen elektronischen Schaltkontakt bei Überschreiten der vorgegebenen Warntemperatur öffnet und dass der erste Optokoppler den zugehörigen elektronischen Schaltkontakt bei Überschreiten der vorgegebenen Übertemperatur öffnet. Vorzugsweise sind beide Optokoppler in einem optoelektronischen Bauelement angeordnet.

Der besondere Vorteil ist, dass zwei Temperaturmeldungen, das heißt zuerst eine Warnmeldung und dann bei Erreichen der Übertemperatur eine entsprechende Übertemperaturmeldung, an die Maschinensteuerung ausgegeben werden kann. Alternativ oder zusätzlich kann die Ausgabe der Übertemperaturmeldung zeitverzögert erfolgen, wie z.B. mittels eines RC-Gliedes, welches der Leuchtdiode des ersten Optokopplers vorgeschaltet ist.

Die zuvor genannten temperaturabhängigen Widerstände weisen alle einen positiven Temperaturkoeffizienten auf. Alternativ können die ersten und/oder zweiten temperaturabhängigen Widerstände auch einen negativen Temperaturkoeffizienten aufweisen. Derartige temperaturabhängige Widerstände werden auch als NTC-Widerstände (NTC für Negative Temperature Coefficient) oder als Heißleiter bezeichnet. In diesen Fällen weist der Detektor auf ein umgekehrtes Schaltverhalten ausgelegt.

Die Aufgabe der Erfindung wird weiterhin mit einem Temperaturüberwachungsmodul zur Anbringung an einer elektrischen Maschine, insbesondere im Bereich einer mehrphasigen Stromwicklung der elektrischen Maschine, gelöst. Das Modul weist bis auf die Reihen- und/oder Parallelschaltung aus den ersten temperaturabhängigen Widerständen und aus dem zweiten temperaturabhängigen Widerstand eine Vorrichtung nach einem der vorangegangenen Ansprüche auf. Das Modul weist zudem Anschlüsse zum externen Anschließen dieser Reihen- und/oder Parallelschaltung und dieses zweiten temperaturabhängigen Widerstandes sowie einen weiteren Anschluss zum externen Anschließen an eine Maschinensteuerung zur Ausgabe einer erfassten Temperatur, des Vorliegens einer Übertemperatur und gegebenenfalls des Vorliegens einer Warntemperatur auf. Ein derartiges Modul kann äußerst kompakte Abmessungen, wie z.B. kleinere Abmessungen als eine Streichholzschachtel, aufweisen. Das Modul kann z.B. in Form einer Leiterplatte mit Anschlussklemmen zum Anschließen der zumeist in der mehrphasigen Stromwicklung mit eingewickelten temperaturabhängigen Widerständen realisiert sein. Dadurch kann das Modul direkt im Bereich der Statorwicklung oder in einem Anschlusskasten der elektrischen Maschine angebracht sein.

Einer besonders vorteilhaften Ausführungsform zufolge weist das Temperaturüberwachungsmodul einen Spannungsversorgungsanschluss zum Anschließen an eine externe Konstantspannungsquelle auf. Die Konstantspannungsquelle kann z.B. eine Gleichspannung mit einem Spannungswert von 5V, 9V, 12V oder 15V liefern. Insbesondere ist das Modul zum Anschließen an eine Drehgeberspannungsversorgung eines zur Drehzahlerfassung der elektrischen Maschine bereits vorhandenen Drehgebers vorgesehen. Dadurch ist eine gesonderte elektrische Versorgung der erfindungsgemäßen Vorrichtung bzw. des erfindungsgemäßen Temperaturüberwachungsmoduls nicht mehr erforderlich.

Schließlich wird die Aufgabe der Erfindung durch eine elektrische Maschine mit einem derartigen, im Bereich einer mehrphasigen Stromwicklung der elektrischen Maschine angeordneten Temperaturüberwachungsmodul, mit einer daran angeschlossenen Reihen- und/oder Parallelschaltung von ersten temperaturabhängigen Widerständen, mit einem daran angeschlossenen zweiten temperaturabhängigen Widerstand und mit einem weiteren Anschluss zum Anschließen an einen Temperaturmesseingang einer Maschinensteuerung der elektrischen Maschine gelöst.

Die Erfindung sowie vorteilhafte Ausführungen der Erfindung werden im Weiteren anhand der nachfolgenden Figuren näher beschrieben. Es zeigen
- FIG 1: eine Vorrichtung zur Temperaturüberwachung einer mehrphasigen Stromwicklung einer elektrischen Ma- schine nach dem Stand der Technik,
- FIG 2: ein Prinzipschaltbild sowie eine erste Ausführungs- form einer erfindungsgemäßen Vorrichtung zur Tempe- raturüberwachung in einer gemeinsamen Darstellung,
- FIG 3: eine zweite Ausführungsform der Vorrichtung,
- FIG 4: eine dritte Ausführungsform der Vorrichtung,
- FIG 5: eine vierte Ausführungsform der Vorrichtung,
- FIG 6: eine fünfte Ausführungsform der Vorrichtung, '
- FIG 7: ein Beispiel für ein in einer elektrischen Maschine angeordnetes erfindungsgemäßes Temperaturüberwa- chungsmodul und
- FIG 8: ein beispielhaftes Anschlussschema eines erfin- dungsgemäßen Temperaturüberwachungsmoduls.

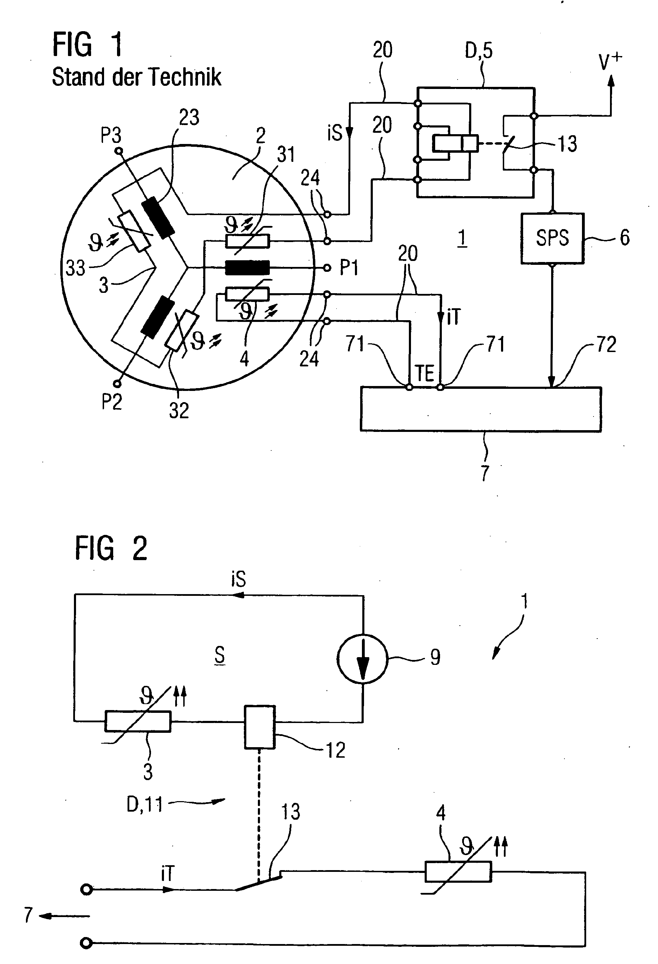

FIG 1 zeigt eine Vorrichtung 1 zur Temperaturüberwachung einer mehrphasigen Stromwicklung einer elektrischen Maschine 2 nach dem Stand der Technik. Im vorliegenden Beispiel ist die elektrische Maschine 2 ein dreiphasiger Synchronmotor. Im Motor 2 ist eine Reihenschaltung 3 aus drei ersten temperaturabhängigen Widerständen 31 bis 33 in Form eines Kaltleiterdrillings zur gemeinsamem Übertemperaturüberwachung der drei Phasenwicklungen 21 bis 23 verlegt. Mit P1 bis P3 sind die Phasenanschlüsse des Synchronmotors 2 bezeichnet. Die bekannte Vorrichtung 1 weist weiterhin einen zweiten temperaturabhängigen Widerstand 4 zur Temperaturerfassung nur einer der Phasenwicklungen 21 bis 23 auf. Die Reihenschaltung 3 ist über einen Anschluss 24 und weiter über Verbindungsleitungen 20 mit einer Motorschutzeinheit 5 verbunden. Letztere weist üblicherweise eine nicht weiter dargestellte Konstantspannungsquelle zum Einspeisen eines Schleifenstroms iS in die Reihenschaltung 3 auf. Die Motorschutzeinheit 5 dient als Detektor D zum Detektieren einer Änderung des durch die Reihenschaltung 3 hindurchfließenden Stroms is. Bei Erreichen eines zu einer vorgegebenen Übertemperatur entsprechenden Stromwertes öffnet die Motorschutzeinheit 5 einen Schaltkontakt 13. Dieser wird von einer nachgeschalteten elektronischen Steuerung 6 (SPS) abgefragt, das heißt sie überprüft, ob die am Schaltkontakt 13 anliegende positive Versorgungsspannung V+ "durchgeschaltet" ist. Ist dies der Fall, so wird das Ereignis über einen nicht weiter gezeigten Digitalausgang der Steuerung 6 an einen Steueranschluss 72 einer nachgeschalteten Maschinensteuerung 7, wie z.B. eines Antriebssteuergerätes vom Typ SIMODRIVE der Fa. Siemens, ausgegeben. Die Maschinensteuerung 7 schaltet darauf hin den Synchronmotor 2 ab.

Weiterhin ist der zweite temperaturabhängige Widerstand 4 über einen weiteren Anschluss 24 zur genauen Temperaturerfassung mit der Maschinensteuerung 7 verbunden. Diese weist einen Temperaturanschluss 71 für einen mit TE bezeichneten Temperaturmesseingang TE der Maschinensteuerung 7 auf. Mit iT ist ein Temperaturmessstrom bezeichnet, welcher die vom zweiten temperaturabhängigen Widerstand 4 erfasste Temperatur abbildet.

FIG 2 zeigt ein Prinzipschaltbild sowie eine erste Ausführungsform einer erfindungsgemäßen Vorrichtung 1 zur Temperaturüberwachung in einer gemeinsamen Darstellung. Mit dem Bezugszeichen ist die Konstantspannungsquelle 9 bezeichnet und mit S eine Stromschleife zur gemeinsamen Überwachung der Reihen- und/oder Parallelschaltung 3. Erfindungsgemäß ist der zweite temperaturabhängige Widerstand 4 jetzt in Reihe zum Schaltkontakt 13 des Detektors D geschaltet. Ist der Schaltkontakt 13 geschlossen, was einem Normalbetrieb der elektrischen Maschine 2 entspricht, so ist die vom zweiten temperaturabhängigen Widerstand 4 erfasste Temperatur zumindest mittelbar an die Maschinensteuerung 7 zur Steuerung und Regelung der elektrische Maschine 2 ausgebbar. Ist der Schaltkontakt 13 aufgrund des Vorliegens der Übertemperatur geöffnet, so ist dieses Ereignis an die Maschinensteuerung 7 ausgebbar. In diesem Fall "interpretiert" die Maschinensteuerung 7 die erfasste Temperatur quasi als unendlich hoch und folglich als Übertemperatur. Im vorliegenden Beispiel ist das Schaltsymbol eines Widerstandes stellvertretend für eine Reihen- und/oder Parallelschaltung 3 von ersten temperaturabhängigen Widerständen 31-33 zu betrachten.

Der Detektor D kann, wie in der gemeinsamen FIG 2 dargestellt, eine in Reihe zur Reihen- und/oder Parallelschaltung 3 geschaltete Erregerspule 12 eines Schaltrelais 11 sein. Sind der gesamte Widerstandswert der Reihen- und/oder Parallelschaltung 3 sowie der Widerstandswert der Erregerspule 12 aufeinander abgestimmt, so öffnet das Schaltrelais 11 bei Überschreiten der vorgegebenen Übertemperatur den Schaltkontakt 13 zur Ausgabe des Vorliegens der Übertemperatur.

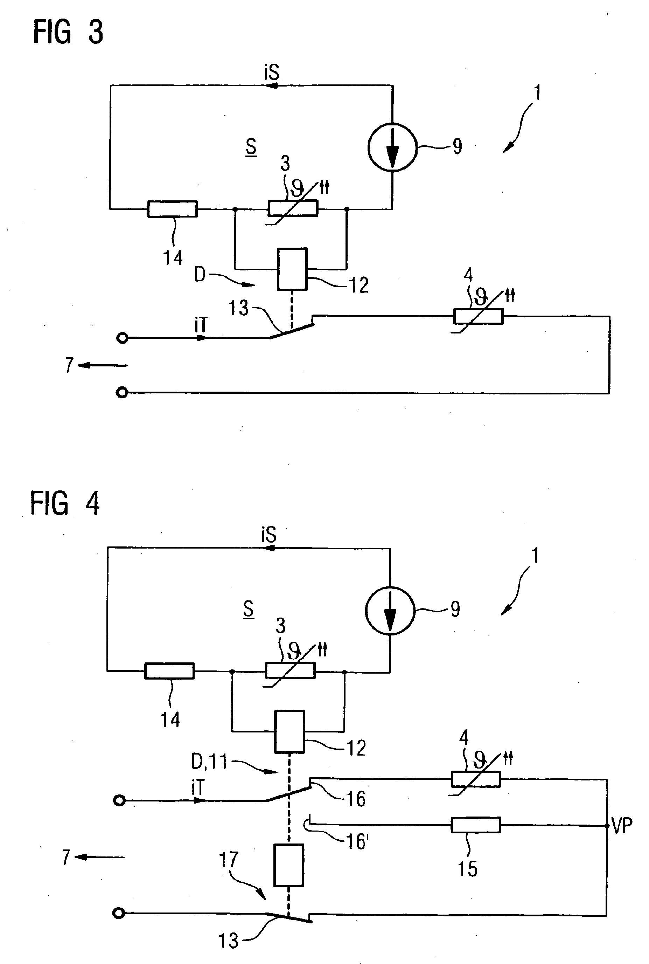

FIG 3 zeigt eine zweite Ausführungsform der Vorrichtung 1. Die gezeigte Vorrichtung 1 unterscheidet sich von der vorherigen dadurch, dass nun ein erster Vorwiderstand 14 in Reihe zur Reihen- und/oder Parallelschaltung 3 geschaltet ist. Es ist die Erregerspule 12 des als Detektor D fungierenden Schaltrelais 11 parallel an die Reihen- und/oder Parallelschaltung 3 geschaltet. Im Gegensatz zur vorherigen Vorrichtung 1 wird das Schaltrelais 11 erst bei Erreichen der Übertemperatur erregt, das heißt, wenn zumindest einer der ersten temperaturabhängigen Widerstände 31 bis 33 vergleichsweise hochohmig wird und dadurch eine ausreichend hohe Spannung zur Speisung der Erregerspule 12 anliegt.

FIG 4 zeigt eine dritte Ausführungsform der Vorrichtung 1. Im Unterschied zur vorherigen FIG 3 öffnet das Schaltrelais 11 zuerst einen ersten Wechslerkontakt 16 bei Überschreiten einer vorgegebenen Warntemperatur, die kleiner ist als die Übertemperatur. Zugleich schließt das Schaltrelais 11 einen zweiten Wechslerkontakt 16'. Weiterhin weist die Vorrichtung 1 ein Zeitschaltrelais 17 auf, welches bei Überschreiten dieser Warntemperatur zeitverzögert den Schaltkontakt 13 öffnet, um wiederum das Vorliegen der Übertemperatur an die Maschinensteuerung 7 auszugeben. Dabei wird beim Öffnen des ersten Wechslerkontaktes 16 und beim Schließen des zweiten Wechslerkontaktes 16' anstelle des zweiten temperaturabhängigen Widerstandes 4 nun ein zweiter Vorwiderstand 15 mit einem auf die Warntemperatur abgestimmten Widerstandswert in Reihe zum Schaltkontakt 13 geschaltet, um das Vorliegen der Warntemperatur an die Maschinensteuerung 7 auszugeben. Mit VP ist ein Verknüpfungspunkt bezeichnet, in dem jeweils ein Ende des zweiten temperaturabhängigen Widerstands 4 und des zweiten Vorwiderstandes 15 zusammengeschaltet sind.

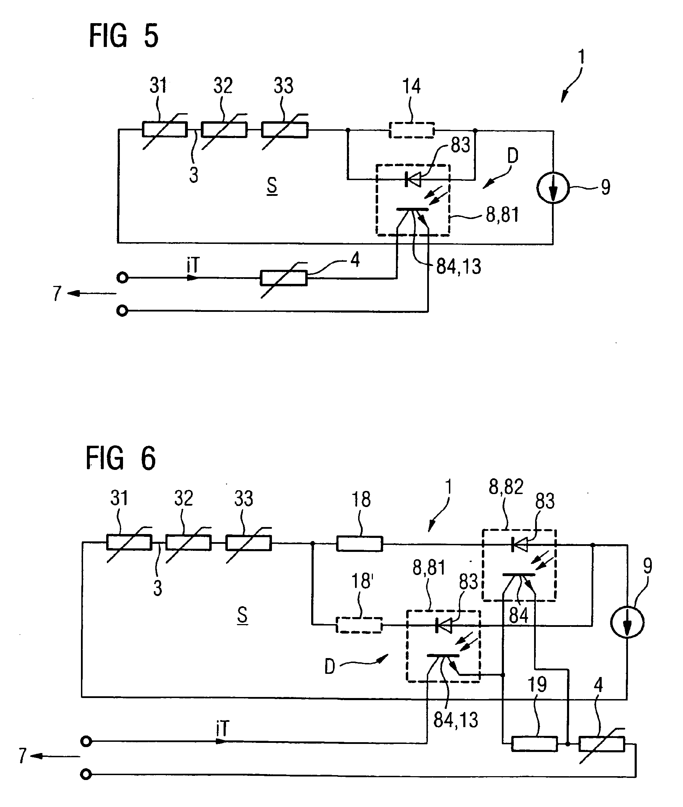

FIG 5 zeigt eine vierte Ausführungsform der Vorrichtung 1. Die erfindungsgemäße Vorrichtung 1 weist anstelle von kontaktbehafteten, elektromechanischen Komponenten 11, 17 verschleißfreie, optoelektronische Bauelemente 83, 84 in Form eines Optokopplers 8, 81 auf. Der Detektor D ist im vorliegenden Fall eine in Reihe zur Reihen- und/oder Parallelschaltung 3 geschaltete Leuchtdiode 83 des Optokopplers 8, 81. Der Schaltkontakt 13 ist ein Phototransistor 84 des Optokopplers 8, 81. Es sind der gesamte Widerstandswert der Reihen- und/oder Parallelschaltung 3 und die elektrischen Kennwerte der Leuchtdiode 83 derart aufeinander abgestimmt, dass der Optokoppler 8, 81 bei Überschreiten der vorgegebenen Übertemperatur den elektronischen Schaltkontakt 84, 13 öffnet. Es kann auch, wie im Beispiel der FIG 5 gestrichelt dargestellt, ein erster Vorwiderstand 14 in Reihe zur Reihen- und/oder Parallelschaltung 3 geschaltet sein. Über diesen ersten Vorwiderstand 14 ist eine genauere und einfachere Einstellung der gewünschten Übertemperatur möglich.

FIG 6 zeigt eine fünfte Ausführungsform der Vorrichtung 1. Die gezeigte schaltungstechnische Anordnung von zwei Optokopplern 81, 82 erlaubt zuerst die Ausgabe einer Warntemperatur, die kleiner ist als die Übertemperatur, an die Maschinensteuerung 7 und nachfolgend die Ausgabe einer Übertemperatur an diese, falls die Temperatur in zumindest einer der Phasenwicklungen 21 bis 23 noch weiter steigen sollte. In diesem Fall umfasst der Detektor D zwei parallelgeschaltete und in Reihe zur Reihen- und/oder Parallelschaltung 3 geschaltete Leuchtdioden 3 der beiden Optokoppler 81, 82. Letztere weisen jeweils einen zugehörigen Phototransistor 84 auf. Der Schaltkontakt 13, 84 des zweiten Optokopplers 82 ist parallel zu einem zweiten Vorwiderstand 19 geschaltet, welcher einen auf eine vorgegebene Warntemperatur abgestimmten Widerstandswert aufweist. Außerdem ist der Phototransistor 84 des ersten Optokopplers 81 in Reihe zu dieser Parallelschaltung und zum zweiten temperaturabhängigen Widerstand 4 geschaltet. Die elektrischen Kennwerte der Leuchtdioden 83, das heißt insbesondere deren ohmscher Widerstand und Nenndurchlassstromwert, sind derart auf den gesamten Widerstandswert der Reihen- und/oder Parallelschaltung 3 abstimmt, dass der zweite Optokoppler 82 den zugehörigen Phototransistor 84 bei Überschreiten der vorgegebenen Warntemperatur öffnet und dass der erste Optokoppler 81 den zugehörigen Phototransistor 84, 13 öffnet, wenn die vorgegebene Übertemperatur überschritten würde. Zur genaueren und einfacheren Einstellmöglichkeit können zumindest einem der beiden Leuchtdioden 83 jeweils ein dritter Vorwiderstand 18, 18' vorgeschaltet sein.

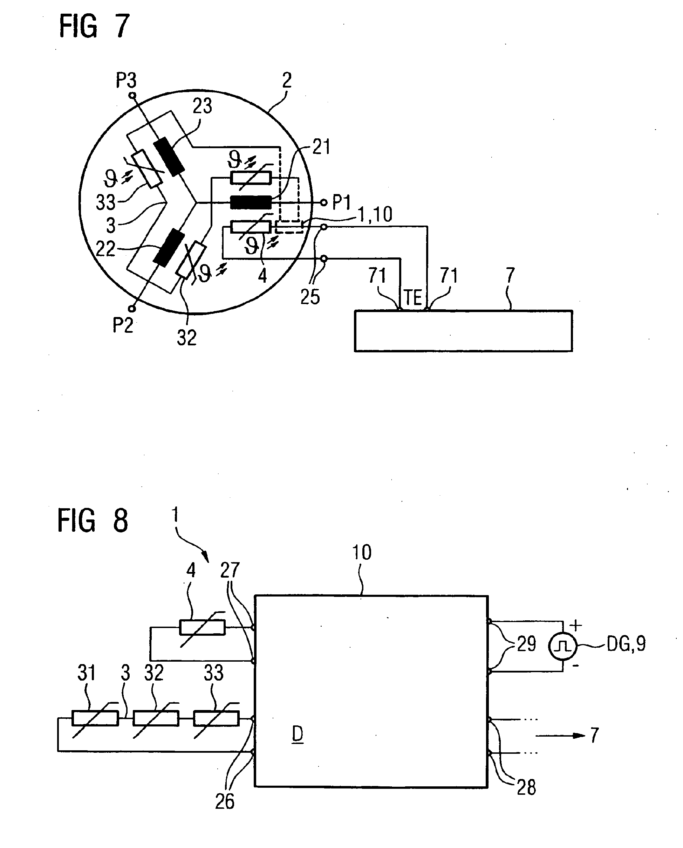

FIG 7 zeigt ein Beispiel für ein in einer elektrischen Maschine 2 angeordnetes erfindungsgemäßes Temperaturüberwachungsmodul 10. Das Modul 10 weist bis auf die Reihen- und/ oder Parallelschaltung 3 aus den ersten temperaturabhängigen Widerständen 31 bis 33 und aus dem zweiten temperaturabhängigen Widerstand 4 eine erfindungsgemäße Vorrichtung 1 auf. Die "ausgelagerten" Bauteile der erfindungsgemäßen Vorrichtung 1 können über Anschlüsse am Modul 10 angeschlossen werden. Die Anschlüsse sind vorzugsweise Klemmen, Stiftleisten oder Buchsen. Ausgangsseitig kann das Modul 10 an die Maschinensteuerung 7 der elektrischen Maschine 2 angeschlossen werden, um die erfasste Temperatur einer der Phasenwicklungen 21 bis 23 oder das Vorliegen einer übertemperatur und gegebenenfalls einer Warntemperatur auszugeben.

FIG 8 zeigt ein beispielhaftes Anschlussschema eines erfindungsgemäßen Temperaturüberwachungsmoduls 10. Mit den Bezugszeichen 26, 27 sind die Anschlüsse zum Anschließen der Reihen- und/oder Parallelschaltung 3 und des zweiten temperaturabhängigen Widerstandes 4 bezeichnet. Der Anschluss 28 ist zum Anschließen an die Maschinensteuerung 7 vorgesehen. Weiterhin weist das Modul 10 einen Spannungsversorgungsanschluss 29 auf, um dort eine externe Konstantspannungsquelle 9 zur Eigenversorgung des Moduls 10 sowie der angeschlossenen temperaturabhängigen Widerstände 31 bis 33, 4 anschlieβen zu können. Mit dem Bezugszeichen DG ist eine Drehgeberspannungsversorgung bezeichnet, welche zur elektrischen Versorgung eines Drehgebers zur Drehzahlerfassung der elektrischen Maschine 2 in den meisten Fällen bereits vorhanden ist. In diesem Fall kann vorteilhaft auf eine separate Spannungsversorgung für das Temperaturüberwachungsmoduls 10 verzichtet werden.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Zusammenfassend betrifft die Erfindung eine Vorrichtung 1 zur Temperaturüberwachung einer mehrphasigen Stromwicklung einer elektrischen Maschine 2. Die Vorrichtung 1 weist eine Reihen- und/ oder Parallelschaltung 3 aus einer der Anzahl von Phasenwicklungen 21 bis 23 entsprechenden Anzahl von ersten temperaturabhängigen Widerständen 31 bis 33 und aus einem zweiten temperaturabhängigen Widerstand 4 insbesondere zur Temperaturerfassung nur einer der Phasenwicklungen auf.

Die Reihen- und/oder Parallelschaltung 3 ist in Reihe zu einer Konstantspannungsquelle 9 geschaltet. Die Vorrichtung 1 weist einen Detektor D zum Detektieren einer Änderung der an der Reihen- und/oder Parallelschaltung 3 anliegenden Spannung oder des hindurchfließenden Stroms iS und zum Ansteuern eines Schaltkontaktes 13 auf, um bei Erreichen eines zu einer vorgegebenen Übertemperatur entsprechenden Spannungs- oder Stromwertes das Vorliegen der Übertemperatur an eine angeschlossene Maschinensteuerung 7 auszugeben. Erfindungsgemäß ist der zweite temperaturabhängige Widerstand 4 in Reihe zum Schaltkontakt 13 geschaltet, so dass bei geschlossenem Schaltkontakt 13 die vom zweiten temperaturabhängigen Widerstand 4 erfasste Temperatur und bei geöffnetem Schaltkontakt 13 das Vorliegen der Übertemperatur ausgebbar sind.

## Patentansprüche

1. Vorrichtung zur Temperaturüberwachung einer mehrphasigen Stromwicklung einer elektrischen Maschine (2),
- wobei die Vorrichtung eine Reihen- und/oder Parallelschaltung (3) aus einer der Anzahl von Phasenwicklungen (21-23) entsprechenden Anzahl von ersten temperaturabhängigen Widerständen (31 bis 33) und aus einem zweiten temperaturabhängigen Widerstand (4) insbesondere zur Temperaturerfassung nur einer der Phasenwicklungen (21 bis 23) aufweist,
- wobei die Reihen- und/oder Parallelschaltung (3) in Reihe zu einer Konstantspannungsquelle (9) geschaltet ist und
- wobei die Vorrichtung einen Detektor (D) zum Detektieren einer Änderung der an der Reihen- und/oder Parallelschaltung (3) anliegenden Spannung oder des hindurchfließenden Stroms (iS) und zum Ansteuern eines Schaltkontaktes (13), um bei Erreichen eines zu einer vorgegebenen Übertemperatur entsprechenden Spannungs- oder Stromwertes das Vorliegen der Übertemperatur an eine angeschlossene Maschinensteuerung (7) auszugeben,
**dadurch gekennzeichnet,**
**dass** der zweite temperaturabhängige Widerstand (4) in Reihe zum Schaltkontakt (13) geschaltet ist, so dass bei geschlossenem Schaltkontakt (13) die vom zweiten temperaturabhängigen Widerstand (4) erfasste Temperatur und bei geöffnetem Schaltkontakt (13) das Vorliegen der Übertemperatur ausgebbar sind.

2. Vorrichtung nach Anspruch 1, **dadurch gekennzeichnet , dass** der Detektor (D) eine in Reihe zur Reihen- und/oder Parallelschaltung (3) geschaltete Erregerspule (12) eines Schaltrelais (11) ist und dass der gesamte Widerstandswert der Reihen- und/oder Parallelschaltung (3) und der Widerstandswert der Erregerspule (12) derart aufeinander abgestimmt sind, dass das Schaltrelais (11) bei Überschreiten der vorgegebenen Übertemperatur den Schaltkontakt (13) öffnet.

3. Vorrichtung nach Anspruch 1, **dadurch gekennzeichnet,**
- **dass** ein erster Vorwiderstand (14) in Reihe zur Reihen-und/oder Parallelschaltung (3) geschaltet ist,
- **dass** der Detektor (D) eine parallel an die Reihen- und/ oder Parallelschaltung (3) oder parallel an den Vorwiderstand (14) geschaltete Erregerspule (12) eines Schaltrelais (11) ist und
- **dass** der Widerstandswert der Reihen- und/oder Parallelschaltung (3) sowie die Widerstandswerte des ersten Vorwiderstandes (14) und der Erregerspule (12) derart aufeinander abgestimmt sind, dass das Schaltrelais (11) bei Überschreiten der vorgegebenen Übertemperatur den Schaltkontakt (13) öffnet.

4. Vorrichtung nach Anspruch 1, **dadurch gekennzeichnet,**
- **dass** der Detektor (D) eine in Reihe zur Reihen- und/oder Parallelschaltung (3) geschaltete Erregerspule (12) eines Schaltrelais (11) ist,
- **dass** der gesamte Widerstandswert der Reihen- und/oder Parallelschaltung (3) und der Widerstandswert der Erregerspule (12) derart aufeinander abgestimmt sind, dass das Schaltrelais (11) bei Überschreiten einer vorgegebenen Warntemperatur, die kleiner ist als die Übertemperatur, einen ersten Wechslerkontakt (16) öffnet und einen zweiten Wechslerkontakt (16') schließt,
- **dass** die Vorrichtung ein Zeitschaltrelais (17) aufweist, welches bei Überschreiten der Warntemperatur zeitverzögert den Schaltkontakt (13) öffnet, um das Vorliegen der Übertemperatur an die Maschinensteuerung (7) auszugeben, und
- **dass** beim Öffnen des ersten Wechslerkontaktes (16) und beim Schließen des zweiten Wechslerkontaktes (16') anstelle des zweiten temperaturabhängigen Widerstandes (4) ein zweiter Vorwiderstand (15) mit einem auf die Warntemperatur abgestimmten Widerstandswert in Reihe zum Schaltkontakt (13) schaltbar ist, um das Vorliegen der Warntemperatur an die Maschinensteuerung (7) auszugeben.

5. Vorrichtung nach Anspruch 1, **dadurch gekennzeichnet,**
- **dass** ein erster Vorwiderstand (14) in Reihe zur Reihen- und/oder Parallelschaltung (3) geschaltet ist,
- **dass** der Detektor (D) eine parallel an die Reihen- und/ oder Parallelschaltung (3) oder parallel an den ersten Vorwiderstand (14) geschaltete Erregerspule (12) eines Schaltrelais (11) ist,
- **dass** der gesamte Widerstandswert der Reihen- und/oder Parallelschaltung (3) sowie die Widerstandswerte des ersten Vorwiderstandes (14) und der Erregerspule (12) derart aufeinander abgestimmt sind, dass das Schaltrelais (11) bei Überschreiten einer vorgegebenen Warntemperatur, die kleiner ist als die Übertemperatur, einen ersten Wechslerkontakt (16) öffnet und einen zweiten Wechslerkontakt (16') schließt,
- **dass** die Vorrichtung ein Zeitschaltrelais (17) aufweist, das bei Überschreiten der Warntemperatur zeitverzögert den Schaltkontakt (13) öffnet, um das Vorliegen der Übertemperatur an die Maschinensteuerung (7) auszugeben, und
- **dass** beim Öffnen des ersten Wechslerkontaktes (16) und beim Schließen des zweiten Wechslerkontaktes (16') anstelle des zweiten temperaturabhängigen Widerstandes (4) ein zweiter Vorwiderstand (15) mit einem auf die Warntemperatur abgestimmten Widerstandswert in Reihe zum Schaltkontakt (13) schaltbar ist, um das Vorliegen der Warntemperatur an die Maschinensteuerung (7) auszugeben.

6. Vorrichtung nach Anspruch 1, **dadurch ge - kennzeichnet,**
- dass der Detektor (D) eine in Reihe zur Reihen- und/oder Parallelschaltung (3) geschaltete Leuchtdiode (83) eines Optokopplers (8,81) ist,
- dass der Schaltkontakt (13) ein photosensitiver elektronischer Schaltkontakt (84) des Optokopplers (8,81) ist und
- dass der gesamte Widerstandswert der Reihen- und/oder Parallelschaltung (3) und die elektrischen Kennwerte der Leuchtdiode (83) derart aufeinander abgestimmt sind, dass der Optokoppler (8,81) bei Überschreiten der vorgegebenen Übertemperatur den elektronischen Schaltkontakt (84,13) öffnet.

7. Vorrichtung nach Anspruch 1, **dadurch gekennzeichnet,**
- **dass** ein erster Vorwiderstand (14) in Reihe zur Reihen- und/oder Parallelschaltung (3) geschaltet ist,
- **dass** der Detektor (D) eine parallel an die Reihen- und/ oder Parallelschaltung (3) oder eine parallel an den ersten Vorwiderstand (14) geschaltete Leuchtdiode (83) eines Optokopplers (8,81) ist,
- **dass** der Schaltkontakt (13) ein photosensitiver elektronischer Schaltkontakt (84) des Optokopplers (8,81) ist und
- **dass** der gesamte Widerstandswert der Reihen- und/oder Parallelschaltung (3), der Widerstandswert des ersten Vorwiderstandes (14) sowie die elektrischen Kennwerte der Leuchtdiode (83) derart aufeinander abgestimmt sind, dass der Optokoppler (8,81) bei Überschreiten der vorgegebenen Übertemperatur den elektronischen Schaltkontakt (84,13) öffnet.

8. Vorrichtung nach Anspruch 1, **dadurch gekennzeichnet,**
- **dass** der Detektor (D) zwei parallelgeschaltete und in Reihe zur Reihen- und/oder Parallelschaltung (3) geschaltete Leuchtdioden (3) eines ersten und zweiten Optokopplers (81,82) mit jeweils einem zugehörigen photosensitiven elektronischen Schaltkontakt (84) umfasst,
- **dass** der Schaltkontakt (84) des zweiten Optokopplers (82) parallel zu einem zweiten Vorwiderstand (15) geschaltet ist, welcher einen auf eine vorgegebene Warntemperatur abgestimmten Widerstandswert aufweist,
- **dass** der Schaltkontakt (84) des ersten Optokopplers (81) in Reihe zu dieser Parallelschaltung und zum zweiten temperaturabhängigen Widerstand (4) geschaltet ist und
- **dass** die elektrischen Kennwerte der Leuchtdioden (83)' derart auf den gesamten Widerstandswert der Reihen- und/oder Parallelschaltung (3) abstimmt sind, dass der zweite Optokoppler (82) den zugehörigen elektronischen Schaltkontakt (84) bei Überschreiten der vorgegebenen Warntemperatur öffnet und dass der erste Optokoppler (81) den zugehörigen elektronischen Schaltkontakt (84,13) bei Überschreiten der vorgegebenen Übertemperatur öffnet.

9. Temperaturüberwachungsmodul zur Anbringung an einer elektrischen Maschine (2), insbesondere im Bereich einer mehrphasigen Stromwicklung der elektrischen Maschine (2), wobei das Modul bis auf die Reihen- und/oder Parallelschaltung (3) aus den ersten temperaturabhängigen Widerständen (31 bis 33) und aus dem zweiten temperaturabhängigen Widerstand (4) eine Vorrichtung (1) nach einem der vorangegangenen Ansprüche aufweist und wobei das Modul Anschlüsse (26, 27) zum externen Anschließen dieser Reihen- und/oder Parallelschaltung (3) und dieses zweiten temperaturabhängigen Widerstandes (4) sowie einen weiteren Anschluss (28) zum externen Anschließen an eine Maschinensteuerung (7) der elektrischen Maschine (2) zur Ausgabe einer erfassten Temperatur, des Vorliegens einer Übertemperatur und gegebenenfalls des Vorliegens einer Warntemperatur aufweist.

10. Temperaturüberwachungsmodul nach Anspruch 9, **dadurch gekennzeichnet , dass** das Modul einen Spannungsversorgungsanschluss (29) zum Anschließen an eine externe Konstantspannungsquelle (9), insbesondere zum Anschließen an eine Drehgeberspannungsversorgung (DG) eines zur Drehzahlerfassung der elektrischen Maschine (2) vorhandenen Drehgebers, aufweist.

11. Elektrische Maschine mit einem im Bereich einer mehrphasigen Stromwicklung der elektrischen Maschine angeordneten Temperaturüberwachungsmodul (10) nach Anspruch 9 oder 10, mit einer daran angeschlossenen Reihen- und/oder Parallelschaltung (3) von ersten temperaturabhängigen Widerständen (31 bis 33), mit einem daran angeschlossenen zweiten temperaturabhängigen Widerstand (4) und mit einem weiteren Anschluss (28) zum Anschließen an einen Temperaturmesseingang (TE) einer Maschinensteuerung (7) der elektrischen Maschine.

## Claims

1. Apparatus for temperature monitoring of a polyphase power winding of an electrical machine (2),
- wherein the apparatus has a series and/or parallel circuit (3) comprising a number of first temperature-dependent resistors (31 to 33) corresponding to the number of phase windings (21-23), and comprising a second temperature-dependent resistor (4) in particular for temperature detection of only one of the phase windings (21 to 23),
- wherein the series and/or parallel circuit (3) is connected in series with a constant voltage source (9), and
- wherein the apparatus has a detector (D) for detection of a change in the voltage which is applied to the series and/or parallel circuit (3) or in the current (iS) flowing through, and for operation of a switching contact (13) in order to output the presence of an overtemperature to a connected machine control means (7), when a voltage or current value is reached which corresponds to a predetermined overtemperature,
**characterized**
**in that** the second temperature-dependent resistor (4) is connected in series with the switching contact (13), such that the temperature detected by the second temperature-dependent resistor (4) can be output when the switching contact (13) is closed, and the presence of the overtemperature can be output when the switching contact (13) is open.

2. Apparatus according to Claim 1, **characterized in that** the detector (D) is a field coil (12) of a switching relay (11), which field coil (12) is connected in series with the series and/or parallel circuit (3), and **in that** the total resistance value of the series and/or parallel circuit (3) and the resistance value of the field coil (12) are matched to one another such that the switching relay (11) opens the switching contact (13) when the predetermined overtemperature is exceeded.

3. Apparatus according to Claim 1,
**characterized**
- **in that** a first bias resistor (14) is connected in series with the series and/or parallel circuit (3),
- **in that** the detector (D) is a field coil (12) of a switching relay (11) which is connected in parallel with the series and/or parallel circuit (3) or in parallel with the bias resistor (14) and
- **in that** the resistance value of the series and/or parallel circuit (3) and the resistance values of the first bias resistor (14) and of the field coil (12) are matched to one another such that the switching relay (11) opens the switching contact (13) when the predetermined overtemperature is exceeded.

4. Apparatus according to Claim 1, **characterized**
- **in that** the detector (D) is a field coil (12) of a switching relay (11), which field coil (12) is connected in series with the series and/or parallel circuit (3),
- **in that** the total resistance value of the series and/or parallel circuit (3) and the resistance value of the field coil (12) are matched to one another such that the switching relay (11) opens a first changeover contact (16), and closes a second changeover contact (16') when a predetermined warning temperature, which is lower than the overtemperature, is exceeded,
- **in that** the apparatus has a time switching relay (17) which opens the switching contact (13) with a time delay when the warning temperature is exceeded, in order to output the presence of the overtemperture to the machine control means (7), and
- **in that**, when the first changeover contact (16) is opened and the second changeover contact (16') is closed, a second bias resistor (15) with a resistance value matched to the warning temperature can be connected in series with the switching contact (13), instead of the second temperature-dependent resistor (4), in order to output the presence of the warning temperature to the machine control means (7).

5. Apparatus according to Claim 1, **characterized**
- **in that** a first bias resistor (14) is connected in series with the series and/or parallel circuit (3),
- **in that** the detector (D) is a field coil (12) of a switching relay (11), which field coil (12) is connected in parallel with the series and/or parallel circuit (3) or is connected in parallel with the first bias resistor (14),
- **in that** the total resistance value of the series and/or parallel circuit (3) and the resistance values of the first bias resistor (14) and of the field coil (12) are matched to one another such that the switching relay (11) opens a first changeover contact (16), and closes a second changeover contact (16'), when a predetermined warning temperature, which is lower than the overtemperature, is exceeded,
- **in that** the apparatus has a time switching relay (17), which opens the switching contact (13) with a time delay when the warning temperature is exceeded, in order to output the presence of the overtemperature to the machine control means (7) and
- **in that**, when the first changeover contact (16) is opened and the second changeover contact (16') is closed, a second bias resistor (15) with a resistance value matched to the warning temperature can be connected in series with the switching contact (13), instead of the second temperature-dependent resistor (4), in order to output the presence of the warning temperature to the machine control means (7).

6. Apparatus according to Claim 1, **characterized**
- **in that** the detector (D) is a light-emitting diode (83) of an optocoupler (8, 81), which light-emitting diode (83) is connected in series with the series and/or parallel circuit (3),
- **in that** the switching contact (13) is a photosensitive electronic switching contact (84) of the optocoupler (8, 81) and
- **in that** the total resistance value of the series and/or parallel circuit (3) and the electrical characteristic values of the light-emitting diode (83) are matched to one another such that the optocoupler (8, 81) opens the electronic switching contact (84, 13) when the predetermined overtemperture is exceeded.

7. Apparatus according to Claim 1, **characterized**
- **in that** a first bias resistor (14) is connected in series with the series and/or parallel circuit (3),
- **in that** the detector (D) is a light-emitting diode (83) of an optocoupler (8, 81), which light-emitting diode (83) is connected in parallel with the series and/or parallel circuit (3) or is connected in parallel with the first bias resistor (14),
- **in that** the switching contact (13) is a photosensitive electronic switching contact (84) of the optocoupler (8, 81) and
- **in that** the total resistance value of the series and/or parallel circuit (3), the resistance value of the first bias resistor (14) and the electrical characteristic values of the light-emitting diode (83) are matched to one another such that the optocoupler (8, 81) opens the electronic switching contact (84, 13) when the predetermined overtemperature is exceeded.

8. Apparatus according to Claim 1, **characterized**
- **in that** the detector (D) has two parallel-connected light-emitting diodes (3), which are connected in series with the series and/or parallel circuit (3), in a first and a second optocoupler (81, 82), each having an associated photosensitive electronic switching contact (84),
- **in that** the switching contact (84) of the second optocoupler (82) is connected in parallel with a second bias resistor (15), which has a resistance value which is matched to a predetermined warning temperature,
- **in that** the switching contact (84) of the first optocoupler (81) is connected in series with this parallel circuit and the second temperature-dependent resistor (4), and
- **in that** the electrical variables of the light-emitting diodes (83) are matched to the total resistance value of the series and/or parallel circuit (3) such that the second optocoupler (82) opens the associated electronic switching contact (84) when the predetermined warning temperature is exceeded, and such that the first optocoupler (81) opens the associated electronic switching contact (84, 13) when the predetermined overtemperature is exceeded.

9. Temperature monitoring module for fitting to an electrical machine (2), in particular in the area of a polyphase power winding of the electrical machine (2),
wherein, except for the series and/or parallel circuit (3) comprising the first temperature-dependent resistors (31 to 33) and the second temperature-dependent resistor (4), the module has an apparatus (1) according to one of the preceding claims, and wherein the module has connections (26, 27) for external connection of this series and/or parallel circuit (3) and of this second temperature-dependent resistor (4), as well as a further connection (28) for external connection to a machine control means (7) for the electrical machine (2), in order to output a detected temperature, the presence of an overtemperture, and, if appropriate, the presence of a warning temperature.

10. Temperature monitoring module according to Claim 9, **characterized in that** the module has a voltage supply connection (29) for connection to an external constant voltage source (9), in particular for connection to a rotary encoder voltage supply (DG) for a rotary encoder which is provided to detect the rotation speed of the electrical machine (2).

11. Electrical machine having a temperature monitoring module (10) according to Claim 9 or 10 arranged in the area of a polyphase power winding of the electrical machine, having a series and/or parallel circuit (3), connected thereto, of first temperature-dependent resistors (31 to 33), having a second temperature-dependent resistor (4) which is connected thereto, and having a further connection (28) for connection to a temperature measurement input (TE) of a machine control means (7) for the electrical machine.

## Revendications

1. Dispositif de contrôle de la température d'un enroulement de courant polyphasé d'une machine ( 2 ) électrique,
- dans lequel le dispositif a un circuit ( 3 ) série et/ou parallèle composé d'un nombre de premières résistances ( 31 à 33 ) qui dépendent de la température correspondant au nombre des enroulements ( 21 à 23 ) de phase et d'une deuxième résistance ( 4 ) qui dépend de la température, notamment pour relever la température de seulement l'un des enroulements ( 21 à 23 ) de phase,
- dans lequel le circuit ( 3 ) série et/ou parallèle est monté en série avec une source ( 9 ) de tension constante et
- dans lequel le dispositif comporte un détecteur ( D ) pour détecter une variation de la tension s'appliquant au circuit ( 3 ) série et/ou parallèle ou du courant ( iS ) qui y passe et pour commander un contact ( 13 ) de commutation afin d'indiquer, lorsqu'une valeur de tension ou de courant correspondant à une température excessive prescrite est atteinte, la présence de la température excessive à une commande ( 7 ) de machine raccordée,
**caractérisé en ce que**
la deuxième résistance ( 4 ) qui dépend de la température est montée en série avec le contact ( 13 ) de commutation de manière à pouvoir indiquer, lorsque le contact ( 13 ) de commutation est fermé, la température relevée par la deuxième résistance ( 4 ) qui dépend de la température et, lorsque le contact ( 13 ) de commutation est ouvert, la présence de la température excessive.

2. Dispositif suivant la revendication 1, **caractérisé en ce que** le détecteur ( D ) est une bobine ( 12 ) d'excitation d'un relais ( 11 ) de commutation, montée en série au circuit ( 3 ) série et/ou parallèle, et **en ce que** la valeur totale de résistance du circuit ( 3 ) série et/ou parallèle et la valeur de la résistance de la bobine ( 12 ) d'excitation sont accordées l'une à l'autre de manière à ce que le relais ( 11 ) de commutation ouvre le contact ( 13 ) de commutation lorsque la température excessive prescrite est dépassée.

3. Dispositif suivant la revendication 1, **caractérisé**
- **en ce qu'**une première résistance ( 14 ) série est montée en série avec le circuit ( 3 ) série et/ou parallèle,
- **en ce que** le détecteur ( D ) est une bobine ( 12 ) d'excitation d'un relais ( 11 ) de commutation, montée en parallèle au circuit ( 3 ) série et/ou parallèle ou en parallèle à la résistance ( 14 ) série et
- **en ce que** la valeur de résistance du circuit ( 3 ) série et/ou parallèle ainsi que les valeurs de résistance de la première résistance ( 14 ) série et de la bobine ( 12 ) d'excitation sont accordées les unes aux autres de manière à ce que le relais ( 11 ) de commutation ouvre le contact ( 13 ) de commutation lorsque la température excessive prescrite est dépassée.

4. Dispositif suivant la revendication 1, **caractérisé**
- **en ce que** le détecteur ( D ) est une bobine ( 12 ) d'excitation d'un relais ( 11 ) de commutation, montée en série avec le circuit ( 3 ) série et/ou parallèle,
- **en ce que** la valeur totale de résistance du circuit ( 3 ) série et/ou parallèle et la valeur de résistance de la bobine ( 12 ) d'excitation sont accordées l'une à l'autre de manière à ce que le relais ( 11 ) de commutation, lorsqu'une température d'avertissement prescrite qui est plus basse que la température excessive est dépassée, ouvre un premier contact ( 16 ) d'inverseur et ferme un deuxième contact ( 16' ) d'inverseur,
- **en ce que** le dispositif a un relais ( 17 ) de commutation temporisé qui, lorsque la température d'avertissement est dépassée, ouvre avec un retard dans le temps le contact ( 13 ) de commutation pour indiquer à la commande ( 7 ) de machine la présence de la température excessive, et
- **en ce que**, lors de l'ouverture du premier contact ( 16 ) d'inverseur et lors de la fermeture du deuxième contact ( 16' ) d'inverseur, une deuxième résistance ( 15 ) série, ayant une valeur de résistance adaptée à la température d'avertissement, peut être montée en série avec le contact ( 13 ) de commutation à la place de la deuxième résistance ( 4 ) qui dépend de la température, afin d'indiquer la présence de la température d'avertissement à la commande ( 7 ) de la machine.

5. Dispositif suivant la revendication 1, **caractérisé**
- **en ce qu'**une première résistance ( 14 ) série est montée en série avec le circuit ( 3 ) série et/ou parallèle,
- **en ce que** le détecteur ( D ) est une bobine ( 12 ) d'excitation d'un relais ( 11 ) de commutation, montée en parallèle au circuit ( 3 ) série et/ou parallèle ou en parallèle à la première résistance ( 14 ) série,
- **en ce que** la valeur totale de résistance du circuit ( 3 ) série et/ou parallèle ainsi que les valeurs de résistance de la première résistance ( 14 ) série et de la bobine ( 12 ) d'excitation sont accordées les unes aux autres de manière à ce que le relais ( 11 ) de commutation, lorsqu'une température d'avertissement prescrite qui est plus basse que la température excessive est dépassée, ouvre un premier contact ( 16 ) d'inverseur et ferme un deuxième contact ( 16' ) d'inverseur,
- **en ce que** le dispositif a un relais ( 17 ) de commutation temporisé qui, lorsque la température d'avertissement est dépassée, ouvre le contact ( 13 ) de commutation avec un retard dans le temps pour indiquer à la commande ( 7 ) de machine la présence de la température excessive, et
- **en ce que**, lors de l'ouverture du premier contact ( 16 ) d'inverseur et lors de la fermeture du deuxième contact ( 16' ) d'inverseur, une deuxième résistance ( 15 ) série, ayant une valeur de résistance adaptée à la température d'avertissement, peut être montée en série avec le contact ( 13 ) de commutation à la place de la deuxième résistance ( 4 ) qui dépend de la température pour indiquer à la commande ( 7 ) de la machine la présence de la température d'avertissement.

6. Dispositif suivant la revendication 1, **caractérisé**
- **en ce que** le détecteur ( D ) est une diode ( 83 ) électro-luminescente d'un opto-coupleur ( 8, 81 ), montée en série avec le circuit ( 3 ) série et/ou parallèle,
- **en ce que** le contact ( 13 ) de commutation est un contact ( 84 ) de commutation électronique photosensible de l'opto-coupleur ( 8, 81 ), et
- **en ce que** la valeur totale de résistance du circuit ( 3 ) série et/ou parallèle et les valeurs électriques caractéristiques de la diode ( 83 ) électro-luminescente sont accordées les unes aux autres de manière à ce que, lorsque la température excessive prescrite est dépassée, l'opto-coupleur ( 8, 81 ) ouvre le contact ( 84, 13 ) de commutation électronique.

7. Dispositif suivant la revendication 1, **caractérisé**
- **en ce qu'**une première résistance ( 14 ) série est montée en série avec le circuit ( 3 ) série et/ou parallèle,
- **en ce que** le détecteur ( D ) est une diode ( 83 ) électro-luminescente d'un opto-coupleur ( 8, 81 ), montée en parallèle au circuit ( 3 ) série et/ou parallèle ou en parallèle à la première résistance ( 14 ) série,
- **en ce que** le contact ( 13 ) de commutation est un contact ( 84 ) de commutation électronique photosensible de l'opto-coupleur ( 8, 81 ), et
- **en ce que** la valeur totale de résistance du circuit ( 3 ) série et/ou parallèle, la valeur de résistance de la première résistance ( 14 ) série ainsi que la valeur électrique caractéristique de la diode ( 83 ) électro-luminescente sont accordées les unes aux autres de manière à ce que, lorsque la température excessive prescrite est dépassée, l'opto-coupleur ( 8, 81 ) ouvre le contact ( 84, 13 ) de commutation électronique.

8. Dispositif suivant la revendication 1, **caractérisé**
- **en ce que** le détecteur ( D ) comprend deux diodes ( 3 ) électro- luminescentes, montées en parallèle et montées en série avec le circuit ( 3 ) série et/ou parallèle, d'un premier et d'un deuxième opto-coupleurs ( 81, 82 ) ayant respectivement un contact ( 84 ) de commutation électronique photosensible qui leur appartient,
- **en ce que** le contact ( 84 ) de commutation du deuxième opto-coupleur ( 82 ) est monté en parallèle avec une deuxième résistance ( 15 ) série qui a une valeur de résistance adaptée à une température d'avertissement prescrite,
- **en ce que** le contact ( 84 ) de commutation du premier opto-coupleur ( 81 ) est monté en série à ce circuit en parallèle et à la deuxième résistance ( 4 ) qui dépend de la température, et
- **en ce que** la valeur électrique caractéristique des diodes ( 83 ) électro-luminescentes sont accordées à la valeur totale de résistance du circuit ( 3 ) série et/ou parallèle de manière à ce que le deuxième opto-coupleur ( 82 ) ouvre le contact ( 84 ) de commutation électronique qui lui appartient lorsque la température d'avertissement prescrite est dépassée et de manière à ce que le premier opto-coupleur ( 81 ) ouvre le contact ( 84, 13 ) de commutation électronique qui lui appartient lorsque la température excessive prescrite est dépassée.

9. Module de contrôle de la température à mettre sur une machine ( 2 ) électrique, notamment dans la région d'un enroulement de courant polyphasé de la machine ( 2 ) électrique, le module ayant, à l'exception du circuit ( 3 ) série et/ou parallèle composé des premières résistances ( 31 à 33 ) qui dépendent de la température et de la deuxième résistance ( 4 ) qui dépend de la température, un dispositif ( 1 ) suivant l'une des revendications précédentes et dans lequel le module comporte des bornes ( 26, 27 ) de raccordement extérieur de ce circuit ( 3 ) série et/ou parallèle et de cette deuxième résistance ( 4 ) qui dépend de la température, ainsi qu'une autre borne ( 28 ) de raccordement extérieur à une commande ( 7 ) de la machine ( 2 ) électrique pour indiquer une température relevée, la présence d'une température excessive et le cas échéant la présence d'une température d'avertissement.

10. Module de contrôle de la température suivant la revendication 9, **caractérisé en ce que** le module a une borne ( 29 ) d'alimentation en tension pour le raccordement à une source ( 9 ) de tension extérieure constante, notamment pour le raccordement à une alimentation ( DG ) en tension d'un indicateur de rotation présent pour relever la vitesse de rotation de la machine ( 2 ) électrique.

11. Machine électrique ayant un module ( 10 ) de contrôle de la température disposée dans la région d'un enroulement de courant polyphasé de la machine électrique suivant la revendication 9 ou 10, comprenant un circuit ( 3 ) série et/ou parallèle, qui y est raccordé, de premières résistances ( 31 à 33 ) qui dépendent de la température, comprenant une deuxième résistance ( 4 ) qui y est raccordée et qui dépend de la température et comprenant une autre borne ( 28 ) pour le raccordement à une entrée ( TE ) de mesure de la température d'une commande ( 7 ) de la machine électrique.
